# EUROPEAN PATENT APPLICATION

(11) **EP 4 592 051 A1**
(43) Date of publication of application: **30.07.2025**
(21) Application number: 25150267.0
(22) Date of filing: 04.01.2025
(51) Int. Cl.: B29C 45/27

(54) **IMPROVED METHOD AND MEANS FOR THERMALLY INSULATING A HOT RUNNER OF AN INJECTION MOLDING SYSTEM**

(30) Priority: 26.01.2024 IT 202400001575
(71) Applicant: Inglass S.p.A., 31020 San Polo di Piave (Treviso) (IT)
(72) Inventor: Dario, Alessandro, 31020 S. Polo di Piave(TV) (IT); Rossi, Massimo, 31020 S. Polo di Piave(TV) (IT)
(74) Representative: Citron, Massimiliano

(57) **Abstract**

A thermal insulation method is described for an injection molding machine equipped with a mold comprising a cavity in which a hot runner is installed, the hot runner having a surface that remains free and separate from the cavity. To improve thermal insulation, there is the step of covering such surface with an insulating member consisting of or comprising
- an inner core consisting of or comprising a material having a filamentous or spongy structure, and
- a polyimide film applied to the entire outer surface of the core.

## Description

The present invention relates to an improved method and means for thermally insulating a hot runner of an injection molding system.

It is known that hot runners in injection molds, e.g. for plastics injection, are installed inside a mold cavity supported only by a few support points. In this way, the hot runner touches the cavity walls to a minimum and heat loss toward the mold is limited. With the same purpose, DE29610028U1 teaches how to coat hot runners with a flexible insulating fabric in the form of a mat.

However, heat loss can be further reduced.

The object of the invention is to propose an improved method and means for thermally insulating a hot runner of the aforementioned type.

A first aspect of the invention is a method of thermal insulation for an injection molding machine which is equipped with a mold comprising a cavity, in the cavity being installed a hot runner having a surface which remains free and separate from the cavity, with the step of
covering such surface with an insulating member consisting of or comprising
- an internal core made of a material with a filamentous or spongy structure, and
- a polyimide film applied to the entire external surface of the core.

A second aspect of the invention is an insulating member for a hot runner installed in a cavity of a mold associated with an injection molding machine, where
the surface of the hot runner that remains free from the cavity is covered by an insulating member comprising:
- an internal core formed of a material having a filamentous or spongy matrix or structure, and
- a polyimide film applied to the entire external surface of the core.

A third aspect of the invention is a hot runner that is installed in a cavity of a mold and has a surface that
- remains free from the cavity and
- is covered by an insulating member which comprises:
   - an internal core formed of a material with a filamentous or spongy matrix or structure, and
   - a polyimide film applied to the entire external surface of the core.

A fourth aspect of the invention is an injection molding machine comprising the hot runner of the third aspect.

By *filamentous structure* we mean a structure determined by the aggregation, even disordered, of filaments or fibres.

By *spongy structure* we mean a porous, elastic structure in whose volume empty alveoli are distributed (similar in shape to that of natural sponges).

In the various aforementioned aspects of the invention the following applies.

The inner core offers the thermal insulation advantages of materials with a filamentary or spongy structure. Thanks to the interposition of small air pockets inside them, these materials have high insulating capacity.

Although the filamentary and/or spongy nature of the inner core theoretically carries the risk of it becoming damaged or releasing particulate matter and fibres into the environment during use, thereby causing problems for operators and pollution in the work environment, advantageously the polyimide film completely seals the inner core thus avoiding the dispersion of fibres or particulates and allowing the use of the aforementioned materials for the inner core despite the potential danger.

The above mentioned insulating member has several advantages. For example, with its structure it reduces the heat transmission caused by convection and radiation. Convection is due to the mobility of the air interposed between two bodies at different temperatures, while radiation is affected by the proximity of the bodies and their color or opacity.

In fact, the material that makes up the core may have a darker color and a non-opaque and non-reflective nature, which would worsen its thermal insulation qualities. Or binders present in the core material can in turn darken and carbonize, inducing an increase in heat radiation if the film were not present.

Furthermore, such an insulating member eliminates or limits heat dispersion thanks to the rarefied structure of the internal core.

The various aforementioned aspects of the invention share the following advantageous variations.

Good experimental results have been obtained when said inner core preferably consists of or comprises at least one of: fiberglass, inert mineral fiber, asbestos fiber, ceramic fiber, ceramic aerogel, aluminum silicate, vermiculite, mica, or basalt fiber.

The film is preferably an adhesive tape, to improve adhesion on the core.

The film is preferably a Kapton^{®} tape, which is resistant to high temperatures, maintains a good gloss even after long use, does not degrade and does not carbonize easily.

The film may comprise a single layer or several superimposed layers.

The film preferably has a light color, and/or a reflective or shiny surface, so the insulating member also effectively limits the heat radiated from the core toward the outside and reflects the surrounding heat.

To increase the sealing of the inner core, preferably the insulating member comprises an intermediate layer arranged between the inner core and the polyimide film.

The intermediate layer may be another polyimide film, e.g. Kapton^{®}, or
a layer of fiberglass, a layer of ceramic fiber, a foil of adhesive aluminum, or an adhesive tape of basalt fiber.

The intermediate layer serves to stop the emission of fibre and particulate matter during subsequent manufacturing processes and during the application of the insulating member on the hot runner.

The intermediate layer may be applied to the entire external surface of the internal core, or only to its larger surfaces if the internal core is, for example, shaped like a small brick or parallelepiped.

Preferably the intermediate layer is adhesive, on one or both sides, to improve the cohesion between the layers of the insulating member.

To increase the mechanical resistance of the insulating member, it preferably comprises a protective member applied externally to the film.

The protective member may take various embodiments, such as a box closed on all sides, or preferably in the form of a lid open on one side of the insulating member facing the part of the hot runner to be insulated. Such protective member may be metallic or plastic resin or similar.

Preferably, in particular working conditions, a spacer member is placed between the insulating member and the part of the hot runner to be thermally insulated. This is useful in the case of more critical applications, wherein the temperature of the *manifold* exceeds a certain value, or where there are resistors in direct contact with the film.

The spacer member may take various embodiments: a metal mesh with two-dimensional or three-dimensional development, a corrugated metal sheet, a flat metal sheet, or a honeycomb structure.

Preferably the spacer member is made of steel.

The insulating member may be assembled around or on an arm of the hot runner or on other elements of the hot runner system, such as a nozzle, an injector, the extensions, etc.

The insulating member may be configured to have a rigid overall structure (such as a small block or brick, or a plate) or a flexible structure (such as a fabric or a mat or a foil), or a flexible structure in one direction and rigid in at least one other direction. The ability to bend and curve is advantageous for example to follow a lateral profile of the hot runner.

The insulating member may be configured to have an overall open or closed three-dimensional shape, such as a cylinder, a torus, or a cone.

The internal core may be configured to have an overall three-dimensional open or closed shape, such as a cylinder, a torus, a cone. In this case, only its external surface will be wrapped by the film and optionally by the intermediate layer, while the inner cavity delimited by the core will come into direct contact with the part of the hot runner to be insulated.

The above-mentioned closed and three-dimensional shapes are useful for example to isolate cylindrical elements of the hot runner such as nozzles, injectors and extensions.

Preferably the insulating member
- is overall a substantially flat object, and/or
- is in the shape of a small brick or block or parallelepiped, and/or
- has an overall thickness preferably of a few mm, e.g. 2 to 10 mm, more preferably 3 to 6 mm.

Preferably the insulating member, and in particular one or each of its components, has uniform thickness.

Preferred examples of polyimide films are: Apical^{®}, Kapton^{®}, UPILEX^{®}, VTEC PI^{®}, Norton TH^{®} and Kaptrex^{®}.

Preferably the film has an external surface capable of reflecting light.

Preferably in the method a protective member is applied on the outer surface of the film.

Preferably in the method the protective member is applied to the film so as to completely enclose it.

Preferably in the method the protective member is applied to the film so as to partially enclose it, leaving a portion of the film uncovered and such portion is brought into contact with a part of the hot runner.

Preferably in the method a spacer member is placed between the insulating member and the part of the hot runner to be thermally insulated.

Preferably in the method the spacer member is a metal mesh, a corrugated metal sheet, or a flat metal sheet.

Preferably in the method the inner core is shaped to have an overall three-dimensional shape of a rotational solid with a central cavity and an outermost lateral surface,
the film being applied only on said outermost lateral surface, and
the insulating member being applied around a part of the hot runner so as to accommodate said part in the central cavity.

In particular, in the method the intermediate layer is applied only on said outermost lateral surface.

The advantages of the invention will be made even clearer by the following description of a preferred system, wherein
- Fig. 1 shows a cross-section of an insulating member according to the invention,
- Fig. 2 shows a cross-sectional view of a first variant of insulating member according to the invention,
- Fig. 3 shows a cross-sectional view of a second variant of the insulating member according to the invention,
- Fig. 4 shows a cross-sectional view of a variant for the application of an insulating member according to the invention.

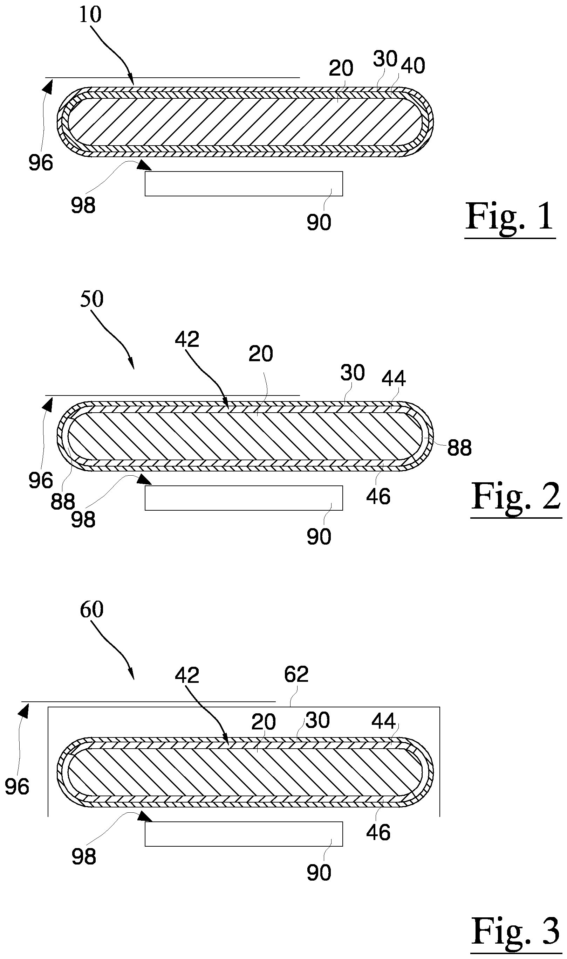

Fig. 1 schematically shows a part of a hot runner 90 having a surface 98 that remains free and separate from the surface 96 of a mold cavity in which the hot runner 90 is mounted.

An insulating member 10 is placed between the surfaces 96, 98 to thermally insulate these surfaces.

The insulating member 10 is formed of an internal core 20 and a polyimide film 30 applied on the entire external surface of the internal core 20.

The internal core 20 is made of a material with a filamentary or spongy matrix or structure, such as glass fibre or ceramic aerogel, and as such has excellent thermal insulation characteristics.

The film 30, preferably a Kapton^{®} tape, not only resists high temperatures but also prevents potentially unhealthy fibers or particulates from escaping from the inner core 20.

To increase the sealing of the inner core, preferably the insulating member 10 comprises an intermediate layer 40 arranged between the inner core 20 and the film 30.

The intermediate layer 40 may be another polyimide film, e.g. Kapton^{®}, or a layer of fiberglass or an aluminum foil.

The intermediate layer 40 may be applied to the entire external surface of the inner core 20, as in fig. 1, or only to the major surfaces of the inner core 20, see insulating member 50 in fig. 2. The result is that in some points the film 30 touches the inner core 20 and is separated from it by an air chamber 88.

Preferably the intermediate layer 40 is adhesive, on one or both sides, to improve the cohesion between the layers of the insulating member.

To increase its mechanical resistance, a protective member 62 applied externally to the film 30 may be added to the insulating member 10 or 50, see variant 60 in fig. 3.

The protective member 62 may take various embodiments, such as a shell or casing that completely encloses the insulating member 10 or 50, or - more preferably - that has the form of a lid open on one side facing the part of hot runner 90 so as to allow contact between the insulating member 10, 50 and the part of hot runner 90.

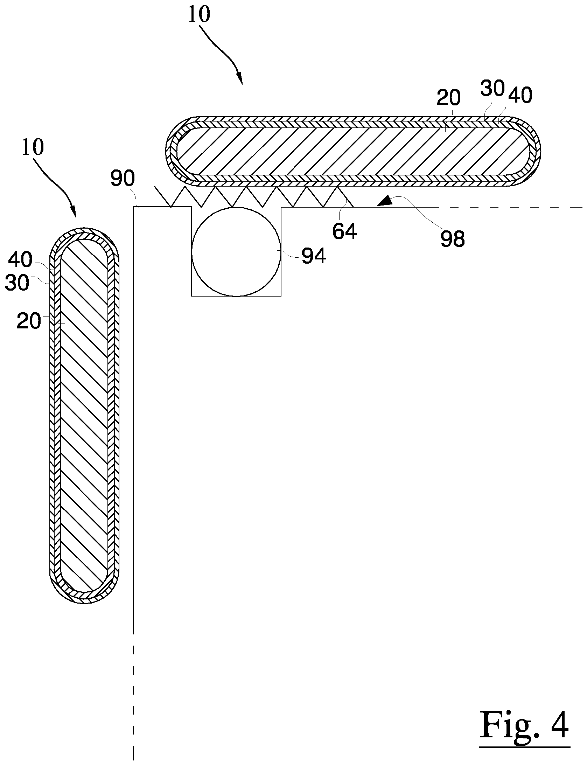

In some high temperature applications (see fig. 4), it is preferable to place a spacer member 64, e.g. made of steel, between the insulating member 10, 50, 60 and the part of the hot runner 90 to separate them.

The spacer member 64 can take various embodiments, e.g. a two- or three-dimensional metal mesh, a corrugated metal sheet, or a flat metal sheet.

In the example of fig. 4 is illustrated a resistor 94, e.g. a tubular resistor, mounted inside a seat obtained on an injection manifold. The seat is represented in an exemplary manner as a channel with a square cross-section. The spacer member 64 is placed e.g. between the resistor 94 and the member 10, 50, 60.

The insulating member 10, 50, 60 is illustrated as a sort of flat small block, however it may be
- either rigid or flexible (when it is advantageous to bend it to fit the curved shape of the part of hot runner 90), and/or
- of three-dimensional concave shape, or in the shape of a shell, or of a cylinder, torus, or cone, and/or
- shaped like a cylinder or cone, hollow inside.

## Claims

1. Thermal insulation method for an injection molding machine equipped with a mold comprising a cavity in which a hot runner is installed, the hot runner having a surface that remains free and separate from the cavity, with the step of
covering such surface with an insulating member consisting of or comprising
- an inner core consisting of or comprising a material having a filamentous or spongy structure, and
- a polyimide film applied to the entire outer surface of the core.

2. Method according to claim 1, wherein said inner core consists of or comprises glass fiber, inert mineral fiber, asbestos fiber, ceramic fiber, ceramic airgel, or aluminum silicate.

3. Method according to claim 1 or 2, wherein the film is an adhesive tape.

4. Method according to any preceding claim, wherein the film is a Kapton@ tape.

5. Method according to any preceding claim, wherein the insulating member comprises an intermediate layer arranged between the inner core and the polyimide film.

6. Method according to claim 5, wherein the intermediate layer is a polyimide film, e.g. Kapton@, or
a layer of fiberglass, a layer of ceramic fiber, or an adhesive aluminum foil.

7. Method according to claim 5 or 6, wherein the intermediate layer is applied to the entire external surface of the inner core.

8. Method according to claim 5 or 6, wherein the intermediate layer is applied only to opposite surfaces of the inner core, so that the film at some points is laid directly over the inner core.

9. Method according to any preceding claim, wherein a spacer member is placed between the insulating member and the part of the hot runner to be thermally insulated.

10. Method according to any preceding claim, wherein the inner core is shaped to have an overall three-dimensional shape of a solid of rotation with a central cavity and an outermost lateral surface,
the film being applied only on said outermost lateral surface, and
the insulating member being applied around a part of the hot runner so as to accommodate said part in the central cavity.
